# EUROPEAN PATENT SPECIFICATION

(11) **EP 2 136 275 B1**
(45) Date of publication and mention of the grant of the patent: **21.05.2014**
(21) Application number: 08425433.3
(22) Date of filing: 18.06.2008
(51) Int. Cl.: G05D 1/02

(54) **Automatic driving system for automatically driving a motor vehicle along predefined paths**
Automatisches Antriebssystem zum automatischen Antrieb eines Motorfahrzeugs entlang vordefinierten Wegen
Système de conduite automatique pour conduire automatiquement un véhicule à moteur le long de chemins prédéfinis

(43) Date of publication of application: 23.12.2009
(73) Proprietor: C.R.F. Società Consortile per Azioni, 10043 Orbassano (Torino) (IT)
(72) Inventor: Burzio, Gianfranco, 10043 Orbassano (IT); Miglietta, Maurizio, 10043 Orbassano (IT); d'Ambrosio, Carlo, 10043 Orbassano (IT)
(74) Representative: Bergadano, Mirko

(56) References cited:
- EP-A- 0 213 938
- EP-A- 0 971 276
- US-A- 5 318 143
- US-A1- 2004 210 357
- US-A1- 2006 167 600

## Description

The present invention relates to an automatic driving system, in particular for use to automatically driving a motor vehicle along predefined paths.

In a known way, when moving around in the traffic, a motor vehicle always travels along different paths, which are not foreseeable or programmable *a priori,* even in the case where it has to reach one and the same target position following one and the same route, on account of the presence of obstacles and other vehicles in the surroundings.

The present applicant has, however, noted that there exist certain "controlled" situations, typically within circumscribed areas, either private or protected (or in any case with limited and controlled access), in which a motor vehicle travels along one or more pre-set paths or routes, which are always the same as one another, and in which there is a limited presence (if not total absence) of obstacles (for example, represented by other motor vehicles in the area) that could impose on the motor vehicle the need to modify its own path. For example, inside a courtyard of a private dwelling, a motor vehicle follows a number of times one and the same path from a first point, an entrance gate, to a second point, a garage; or else, inside a loading/unloading area of a group of warehouses, a motor vehicle follows a plurality of pre-set paths from an entrance point to reach a loading/unloading point in a respective warehouse (so-called "docking" manoeuvre); or else again, inside a car park, a motor vehicle typically moves along predefined paths to move from an entrance point to a given parking area.

Currently, in the situations previously described, the driver of the motor vehicle must typically perform repeatedly the same manoeuvres to reach the desired destinations following the predefined paths. In addition, it frequently happens that the driver of the motor vehicle, in the case where he does not know the configuration of the controlled area, encounters some difficulty in reaching his destination; a typical example is represented by the difficulty in finding a free parking spot in a public or private car park, or else an unloading area assigned inside a goods loading/unloading area. In general, there is an evident risk of errors of manoeuvre arising that may involve a considerable waste of time, all the more if it is taken into account that, as can be shown, the driver's attention is typically reduced during execution of so-called "routine" manoeuvres.

US 2006/0167600 A1, EP 0 971 276 A1 and US 2004/0210357 disclose automatic driving system, wherein a vehicle is guided along a desired path based on positioning data provided by an external positioning system, such as a GPS (Global Positioning System). Programming of the desired path is performed using the external positioning system, in order to detect and store successive positions of the vehicle during a learning phase in which the vehicle is driven along the desired path.

US 5 318 143 discloses an automatic vehicle steering system, wherein a highway lane is sensed by means of a detection arrangement, including optical transmitters and receivers, and a steering system is controlled based on the data provided by the detection arrangement.

EP 0 213 938 A2 discloses a guidance system for a vehicle, wherein the position of the vehicle is detected by means of an external camera arrangement, detecting light emitted by emitters placed on the vehicle; positioning data are used to drive the vehicle towards a desired position.

The aim of the present invention is to provide a solution to the problems described previously such as to make manoeuvres along predefined paths in controlled areas more efficiently and comfortably executable.

According to the present invention, an automatic driving system is provided, as defined in claim 1.

For a better understanding of the present invention, preferred embodiments thereof are now described, purely by way of nonlimiting example and with reference to the attached drawings, wherein:
- Figure 1 is a schematic representation of a circumscribed and controlled area, in particular a goods loading/unloading area, in which a motor vehicle follows programmed paths;
- Figure 2 is a block diagram of an automatic driving system according to a first embodiment of the invention;
- Figure 3 shows a flowchart corresponding to automatic driving operations; and
- Figures 4-6 show block diagrams of the automatic driving system according to variants of the present invention.

One aspect of the present invention is based upon the Applicant's realization that using the sensors and actuators normally present on board a motor vehicle, it is possible to keep a motor vehicle on a programmed path in an automatic way during displacement from a first position to a second position, both of which are pre-defined. An automatic driving system is consequently proposed, which is of aid to the driver of a motor vehicle in the case of displacement along predefined programmed paths, for example, ones having a maximum length in the region of some hundreds of metres.

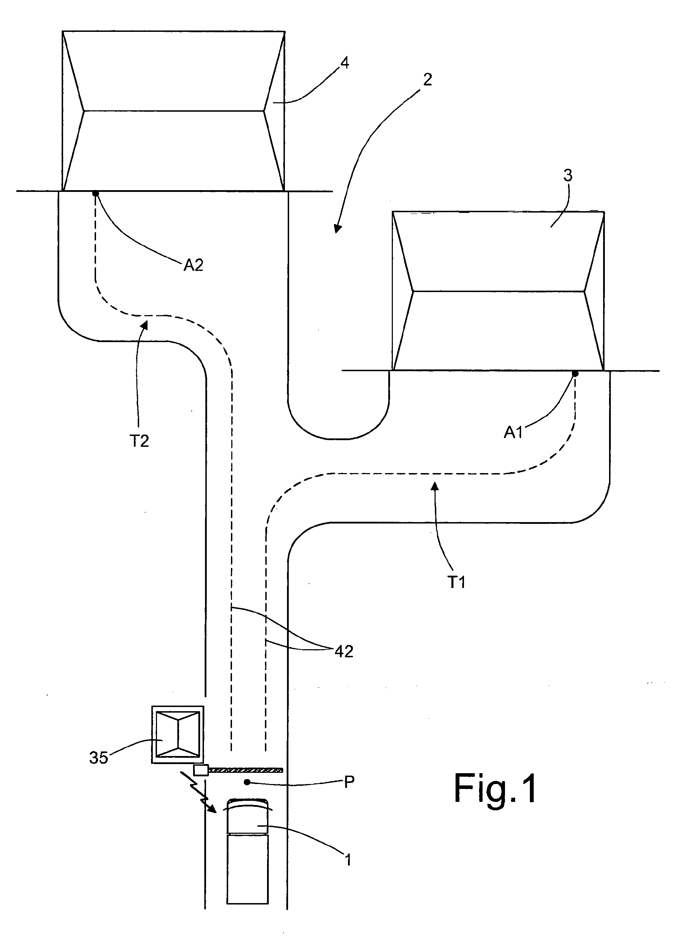

Figure 1 is a schematic representation of a typical scenario of use of the automatic driving system according to the present invention. In particular, a motor vehicle 1, which is at an entrance point P of a goods loading/unloading area 2 (a so-called "hub"), must reach a first loading/unloading warehouse 3, and in particular a first target point A1, or else a second loading/unloading warehouse 4, and in particular a second target point A2. The automatic driving system envisages definition of at least one first pre-defined path T1 for reaching the first target point A1 starting from the starting point P, and a second pre-defined path T2 for reaching the second target point A2, starting from the same starting point P. The two predefined paths T1 and T2 are, for example, optimized for reducing the goods loading/unloading times and the likelihood of occurrence of obstacles and obstructions along the path. The automatic driving system is configured to drive in an at least partially automatic way (as will be described in detail hereinafter) the motor vehicle 1 along the predefined paths T1, T2.

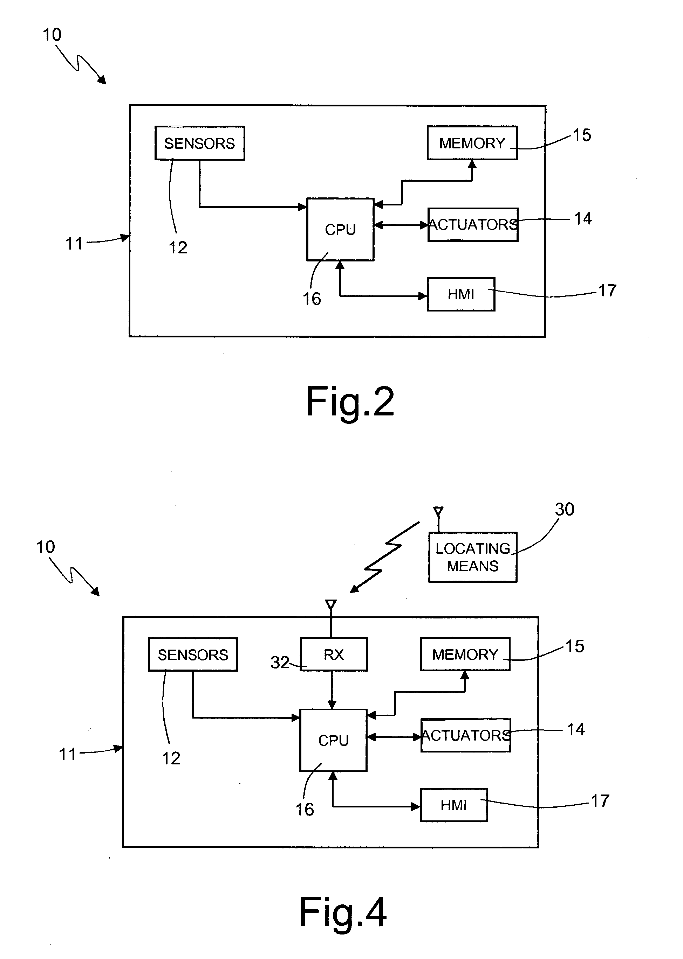

As is shown in Figure 2, the automatic driving system, designated as a whole by 10, comprises an automatic driving unit 11, intended to be arranged on board the motor vehicle 1 and designed to implement automatic driving of the motor vehicle 1 along the predefined paths T1, T2.

In detail, the automatic driving unit 11 comprises a plurality of sensors 12, which are designed to detect (in a way in itself known) operating parameters of the motor vehicle 1, amongst which a sensor of the angle of rotation of the wheel, a sensor of the steering angle, and a yaw sensor; and a plurality of actuators 14, which are designed to control (in a way in itself known) devices for driving the motor vehicle 1, amongst which the steering, the brake, and the accelerator (not illustrated). Possibly, the sensors 12 can comprise a satellite positioning sensor (GPS), an artificial-vision system, a short-range radio communication system, and/or a longitudinal accelerometer.

The automatic driving unit 11 further comprises: a storage device 15, designed to store driving data corresponding to programmed paths that the motor vehicle 1 is able to following; and a central processing unit (CPU) 16, operatively connected to the sensors 12, to the actuators 14, and to the storage device 15, and configured so as to supervise the operations of programming of the paths and to implement automatic driving of the motor vehicle 1 along the programmed paths. In particular, the central processing unit 16 for this purpose is able to execute a purposely provided computer program constituted by a set of software instructions.

The automatic driving unit 11 further comprises a purposely designed user interface 17 (HMI - Human Machine Interface), connected to the central processing unit 16, and configured so as to: enable reception of commands imparted by the driver of the motor vehicle 1 (for example, a command for starting of the automatic manoeuvre, a command for selection of the programmed path to be followed, etc.); and/or inform the driver on the state of the automatic manoeuvre and on operating parameters of the motor vehicle 1; and/or request possible interventions on the part of the driver, for example stopping of the motor vehicle 1 or engagement of the reverse gear, in the case where the manoeuvre is only partially automatic. The operating parameters corresponding to automatic driving and the information in general can be supplied visually and/or through voice and acoustic messages. The acoustic/voice mode can be preferred to prevent the visual attention of the driver from being distracted away from the road and hence enable his timely perception of any possible dangers and obstacles. In a way in itself known, the user interface 17 hence comprises means for selection and input of data, for example, in the form of pushbuttons, and display means, for example a screen.

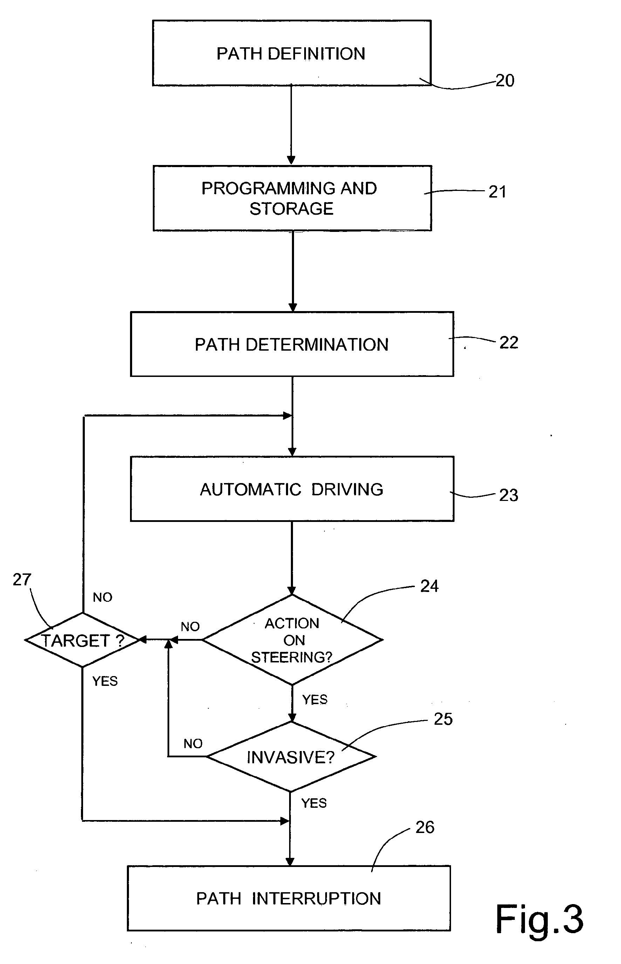

The general operation of the automatic driving system 10 (reference may be made also to Figure 3), envisages first (step 20) definition of the predefined paths T1, T2 inside the controlled area in which the motor vehicle 1 will be driven (for example, the aforesaid goods loading/unloading area 2).

If need be, the predefined paths T1, T2 are programmed and stored inside the storage device 15 (step 21). In particular, driving data defining the programmed paths are stored, such as: a succession of values of the actuation commands to be imparted on the actuators 14 (for example, in terms of level of actuation of the steering, of the brakes, and of the accelerator) or else, alternatively, a succession of displacements to be imparted on the motor vehicle 1 (defined in a given reference system). In the latter case, the generation and processing of the specific actuation commands as a function of the displacements required is entrusted to the CPU 16 (with techniques in themselves known).

Once the programmed path along which the motor vehicle 1 is to be driven has been determined, and once a corresponding initial point has been reached (for example, the aforesaid entrance point P) (step 22), the CPU 16 starts (step 23), the procedure of automatic driving of the motor vehicle 1 (for example, following upon actuation of a purposely provided starting pushbutton on board the motor vehicle 1). In particular, the CPU 16 retrieves the driving data from the storage device 15, processes them, if necessary, and imparts appropriate actuation commands on the actuators 14. In a way in itself known and not described in detail herein, the CPU 16 receives from the sensors 12 information on the movement of the motor vehicle 1, thus providing a closed-loop feedback control for automatic driving of the motor vehicle 1.

According to a currently preferred embodiment of the invention, for reasons of safety the driver is allowed to exert a manual control with priority on the automatic driving procedure, for example, for a timely reaction to anomalous situations, such as the appearance of obstacles along the way. For this purpose, during automatic driving, the driver can exert an active control at least on the brake and accelerator pedals (and change gear in the case where it becomes necessary to reverse the direction of travel), without the automatic driving procedure being interrupted, and/or an active control on the steering wheel, with the result of being able to interrupt the automatic driving procedure. In any case, the processing unit 16 gives priority the manual commands imparted by the driver over the automatic driving procedure.

Consequently, during the automatic driving procedure, it is determined whether the driver has exerted an action on steering (step 24).

If he has, the CPU 16 judges whether the intervention of the driver is or is not invasive (step 25) (for example, the duration of said intervention, or else the extent of the deviation, with respect to the pre-defined path, generated by the manual intervention of the driver, are compared with respective pre-defined thresholds). In the case where the intervention of the driver is judged as being invasive, the automatic driving procedure is interrupted (step 26).

Otherwise, i.e., if there do not occur interventions on the part of the driver or said interventions are judged as being not excessively invasive, the procedure continues (step 27), (possibly resuming the automatic driving) until the end of the pre-defined path T1, T2 is reached and the corresponding target point (for example, the first target point A1 or the second target point A2) is reached, after which the automatic driving procedure is interrupted (step 26).

In greater detail, a first embodiment of the invention envisages that programming and storage of the predefined paths T1, T2, which will be repeated in an automatic way, will be performed "manually" during a "self-learning" procedure. Namely, the driver positions the motor vehicle 1 at a given starting point P (a position that may hence be easily repeatable, for example, an entrance gate of the controlled area); the driver then starts (for example, via a purposely provided pushbutton present on the dashboard of the motor vehicle 1 which forms part of the user interface 17) a learning and storage mode and performs, by manually driving the motor vehicle 1, the desired manoeuvres along the predefined path T1, T2. During the manoeuvre, the CPU 16 detects the outputs of the sensors 12 and/or the extent of actuation of the actuators 14, and stores corresponding driving data in the storage device 15, associating them to the path followed (which can advantageously be identified via a respective identifier code). Next, it will be sufficient for the driver to position the motor vehicle 1 in the same starting point P and start, for example via a further pushbutton provided on the dashboard, the automatic driving procedure to replicate the pre-defined path T1, T2 previously stored.

In this embodiment, each error made in the effective initial positioning of the motor vehicle 1 with respect to the starting point P of the path inevitably reflects upon the entire ensuing manoeuvre, and upon correct reaching of the target point A1, A2 envisaged.

In order to overcome the above drawback, a variant of the invention (Figure 4) envisages that the automatic driving system 10 will comprise positioning means 30, which are designed to co-operate with the automatic driving unit 11 to implement the automatic driving procedure, and in particular which are designed to determine the effective initial position of the motor vehicle 1; and a receiving unit 32 configured to be arranged on board the motor vehicle 1 and operatively connected to the storage device 15 via the CPU 16 and designed to receive positioning information from the positioning means 30.

The positioning means 30 comprise, for example, a video camera, installed in the vicinity of the starting point P, and/or proximity sensors, which are arranged at the corners of the motor vehicle 1 and are designed to co-operate with the CPU 16 for detecting the error of positioning of the motor vehicle 1 with respect to the starting point P envisaged. Assuming that the vehicle is not displaced with the engine turned off, it is possible to avoid provision of similar positioning means for determining the target point A1, A2 to implement the reverse manoeuvre for return. In fact, in this case, it is sufficient to store the final position reached by the motor vehicle 1 (determined as a function of the path followed and of the aforesaid error of positioning with respect to the starting point P envisaged).

A second embodiment of the present invention envisages a different mode of programming of the predefined paths T1, T2 on board the motor vehicle 1.

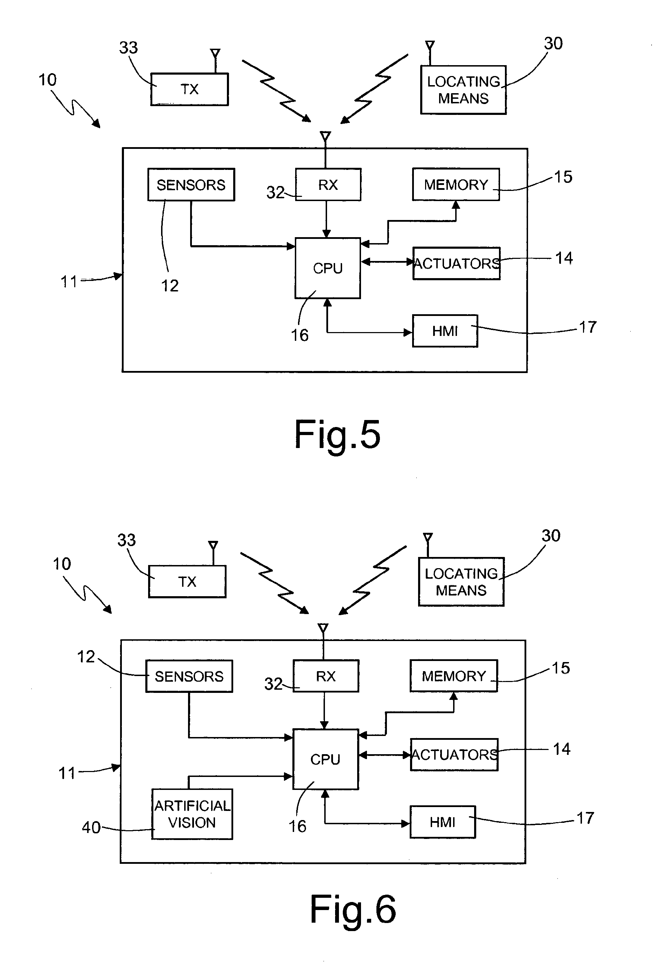

In detail, the positioning system 10 comprises, in this case (Figure 5), a transmission unit 33 belonging, for example, to a central supervision station 35 (see also to Figure 1) of the goods loading/unloading area 2, arranged in a point corresponding to the starting point P.

In use, after the driver has taken the motor vehicle 1 to the starting point P, the transmission unit 33 sends the driving data, corresponding to the pre-defined path T1, T2 that the motor vehicle 1 is to perform (for example, for loading/unloading goods at the first loading/unloading warehouse 3), to the receiving unit 32 on board the motor vehicle 1. The driving data are then stored in the corresponding storage device 15, for programming the path and subsequent use by the CPU 16 for implementing the automatic driving along the programmed path. In particular, the driving data can be transmitted in a wide range of different ways, using, for example, known technologies for short-range wireless transmission of data, such as Bluetooth or WiFi technology. Advantageously, the pre-defined path can be provided in the same reference system in which the positioning means 30 determine the initial position of the motor vehicle 1.

According to a further variant of the present invention, the automatic driving system 10 further comprises means for dynamic correction of the path followed by the motor vehicle 1, which are configured in such a way as to determine, during execution of the automatic driving procedure, the presence of errors with respect to the pre-defined path stored and so as to enable the appropriate corrections to be thus made.

In detail (Figure 6), the automatic driving unit 11 comprises artificial-vision means 40, operatively coupled to the CPU 16, and the automatic driving system 10 comprises path-reference means 42 (shown schematically in Figure 1) arranged along the pre-defined path T1, T2 that the motor vehicle 1 is to follow. The path-reference means 42 are configured in such a way as to be used by the artificial-vision means 40 for determining the lateral error of the motor vehicle 1 with respect to the predefined path T1, T2.

In greater detail, the artificial-vision means 40 comprise a video camera arranged on the front part or on the rear part of the motor vehicle 1, and facing downwards so as to frame the ground. The path-reference means 42 comprise, for example, one or more stripes painted on the ground (or other similar signs present on the ground), which are designed to indicate the pre-defined path T1, T2 and are located along the path itself. In use, the video camera, managed by the CPU 16, films the stripes so as to verify the lateral displacement of the motor vehicle 1 with respect to the path to be followed, and sends corresponding information to the CPU 16, which corrects any possible driving errors. The knowledge of the model of the motor vehicle 1 (and of a possible trailer) enables correction of the lateral error during a movement of reverse, even though the video camera is arranged on the front. The arrangement of the video camera on the rear side of the vehicle may in fact be complex in the case (which is common for heavy vehicles) where a trailer is present that is frequently replaced during operations performed by vehicle. In addition, it would be more costly to have to make available two video cameras, one on the front and one on the back. The knowledge of the model of the vehicle, of the movement of the vehicle itself, and possibly of the angle between the tractor and the trailer, render superfluous the presence of the rear video camera for determining the position of the back with respect to the predefined path. In any case, the artificial-vision means 40 may possibly comprise a number of video cameras, for example a first video camera and a second video camera, arranged, respectively, on the front and on the back of the motor vehicle 1.

Advantageously, further information can be associated to the stripes, encoded for example by means of short interruptions or changes of width, which can be used for correction of the longitudinal position of the motor vehicle 1 along the path to be followed (for example, the stripes can have a double width for a length of 50 cm every 10 m of the path). In this way, the motor vehicle 1 can be positioned by the automatic driving system 10 with a high degree of precision both laterally and longitudinally with respect to the desired path, with errors in the order of the centimetre.

From an examination of the characteristics of the automatic driving system provided according to the present invention, the advantages that it enables are evident.

In particular, it affords, also for professional drivers, a marked reduction in the time taken to reach the destination envisaged and in the possibility of committing errors, during manoeuvres that are to be made along predefined paths in circumscribed and controlled areas. It is emphasized that the system can be applied to any type of motor vehicle, without any need for complex structural modifications (in so far as it uses sensors and actuators that are normally present on board), and that it can be used for automatic driving inside areas of any type, without there being envisaged mechanical driving means (for example, rails) for guiding the motor vehicle along the predefined paths.

As has been described previously, the system is configurable and can be readily adapted to, and used in, a wide range of situations, from the least complex (for example, a private courtyard), in which a low-cost solution is required (such as, for example, the one shown in Figure 2), to the most complex (for example, a complex goods loading/unloading hub), in which a more sophisticated solution is required (such as, for example, the one shown in Figure 6) to make docking manoeuvres efficient, fast, and safe.

It is clear that modifications and variations may be made to what is described and illustrated herein, without thereby departing from the sphere of protection of the present invention, as defined in the annexed claims.

In particular, it is evident that, according to how the automatic driving system 10 is configured, the driving procedure can be completely automatic or only partially automatic; for example, it is possible to decide to leave it to the driver to control the brake pedal and the accelerator pedal, and limit the automatic action just to the control of the steering.

In addition, it is evident that the procedure of manual definition and programming of the paths can envisage learning and storage of a plurality of predefined paths inside the storage device 15, with the possibility on the part of the user of selecting the desired path from amongst the ones stored, recognizing it via the associated identification code. Likewise, the transmission unit 33 of the central supervision station 35 can transmit to the motor vehicle 1 driving data regarding a plurality of paths that can be selected by the driver.

The automatic driving unit 11 can further comprise anticollision sensors (of a type in themselves known) in order to improve further the safety of the automatic driving system.

It is moreover evident that there could be provided further variants to the automatic driving system, obtained, for example, by combining appropriately certain of the embodiments described previously; for example, the stripes painted on the ground could be used only in the terminal part of the path, in the case where the errors with respect to the path to be followed are not particularly important in the initial and intermediate parts of the path itself (for example, because they are performed on wide yards).

The predefined paths stored may also comprise a reverse manoeuvre (for return to the entrance point P from the target point A1, A2), appropriately modified for reversing the direction of travel of the motor vehicle 1. Alternatively, the CPU 16, via appropriate processing operations, can determine the reverse path. For example, in the case where the motor vehicle 1 concludes the manoeuvre in reverse, it is possible for the system to determine the reverse path automatically by connecting up the reverse stretch to the forward stretch, thus avoiding the need to travel in reverse.

Finally, satellite positioning systems, in versions provided with the necessary precision (in the order of the centimetre), could be used for defining the predefined paths that the motor vehicles is to follow and for referring both the position of the path-reference means 42 (i.e., the painted stripes) and the stored paths to the same reference system.

## Claims

1. An automatic driving system (10) for a motor vehicle (1), comprising: an automatic driving unit (11) intended to be arranged on board the motor vehicle (1) and including actuating means (14) configured to control one or more driving devices of the motor vehicle (1); a storage unit (15) configured to store driving data defining at least one programmed path (T1) to be run by the motor vehicle (1) from a starting point (P) to a target point (A1) inside a given area; and a processing unit (16) operatively coupled to the actuating means (14) and the storage unit (15) and configured to manage programming of the programmed path (T1) and to operate the actuating means (14) based on the stored driving data to cause the motor vehicle (1) to run the programmed path (T1); wherein the processing unit (16) is configured to implement a procedure for self-learning the programmed path (T1), during which the processing unit (16) automatically generates and stores the driving data in the storage unit (15) while the programmed path (T1) is being travelled along, under
the manual control of a driver of the motor vehicle (1); **characterized in that** the driving data correspond to an extent of actuation of the actuating means (14) along the programmed path (T1).

2. The system according to claim 1, wherein the storage unit (15) is further configured to store driving data corresponding to at least one further programmed path (T2); and wherein the processing unit (16) is further configured to select one of the programmed paths (T1, T2) stored in the storage unit (15) and to operate the actuating means (14) based on the corresponding stored driving data to cause the motor vehicle (1) to run the selected programmed path (T1, T2).

3. The system according to claim 2, wherein the automatic driving unit (11) further comprises a user interface (17) including means for activating the automatic driving; and/or means for displaying operating parameters corresponding to the automatic driving; and/or means for selecting the programmed paths (T1, T2).

4. The system according to any one of the preceding claims, further comprising a supervision unit (33, 35) configured to transmit driving data to the motor vehicle (1); and wherein the automatic driving unit (11) further comprises a receiving unit (32) configured to receive the driving data transmitted by the supervision unit (33, 35) and operatively coupled to the processing unit (16) to store the received driving data in the storage unit (15).

5. The system according to any one of the preceding claims, further comprising a locating unit (30) configured to determine and transmit to the motor vehicle (1) an effective initial position thereof upon starting of the automatic driving; and wherein the processing unit (16) is further configured to determine an initial positioning error of the motor vehicle (1) with respect to the starting point (P), and to implement the automatic driving of the motor vehicle (1) based on the initial positioning error.

6. The system according to claim 5, wherein the locating unit (30) comprises a camera or proximity sensors external to the motor vehicle (1).

7. The system according to any one of the preceding claims, further comprising path control means (40, 42) configured to enable the processing unit (16) to control the relative position of the motor vehicle (1) with respect to the programmed path (T1) during the automatic driving to correct any possible positioning errors; the path control means (40, 42) comprising position reference elements (42) arranged along the programmed path (T1), and an artificial vision unit (40) intended to be arranged on board the motor vehicle (1) and operatively coupled to the processing unit (16) to co-operate with the position reference elements (42) to control the relative position.

8. The system according to claim 7, wherein a position encoding is associated with the position reference elements (42), and the processing unit (16) is configured to co-operate with the artificial vision unit (40) to locate the motor vehicle (1) along the programmed path (T1) as based on the position encoding.

9. The system according to any one of the preceding claims, wherein the automatic driving unit (11) further comprises a plurality of sensors (12) operatively coupled to the processing unit (16) and designed to sense operating parameters of the motor vehicle (1); during the automatic driving, the processing unit (16) being configured to feedback controlling the programmed path (T1) based on the information received from the sensors (12).

10. The system according to claim 9, wherein the sensors (12) comprise one or more from amongst a steering angle sensor, a wheel rotation angle sensor, a yaw sensor, an accelerometer, and a GPS sensor; and wherein the actuating means (14) comprise one or more from amongst a steering actuator, a brake pedal actuator, and an accelerator pedal actuator.

11. The system according to any one of the preceding claims, wherein the processing unit (16) is configured to sense manual commands imparted by a driver of the motor vehicle (1) on the driving devices during the automatic driving and to operate the manual commands with priority over the automatic driving.

12. The system according to claim 11, wherein the processing unit (16) is configured to interrupt the automatic driving when the manual commands meet given criteria.

13. The system according to any one of the preceding claims, wherein the processing unit (16) is further configured to implement the automatic driving along a reverse path with respect to the programmed path (T1), which extends from the target point (A1) to the starting point (P).

14. Use of the automatic driving system (10) according to any one of the preceding claims, for automatically driving the vehicle in the given area ; the given area being circumscribed and controlled, in particular the area being a goods loading/unloading area, the starting point (P) being at the entrance of the goods loading/unloading area, and the target point (A1) being the point in which goods are loaded/unloaded.

15. An on-vehicle automatic driving unit (11) for use in an automatic driving system (10) according to any one of claims 1-13.

16. A motor vehicle (1) provided with an on-vehicle automatic driving unit (11) according to claim 15.

17. A software product loadable into a storage unit (15) of a processing unit (16) of an on-vehicle automatic driving unit (11), and configured to cause, when run, the motor vehicle (1) to be automatically driven in an automatic driving system (10) according to any one of claims 1 to 13.

## Patentansprüche

1. Ein automatisches Antriebssystem (10) für ein Motorfahrzeug (1), umfassend: eine automatische Antriebseinheit (11), die dazu bestimmt ist, an Bord des Motorfahrzeugs (1) angeordnet zu werden, umfassend Betätigungsmittel (14), die dazu ausgelegt sind, eine oder mehrere Antriebsvorrichtungen des Motorfahrzeugs (1) zu steuern, eine Speichereinheit (15) zur Speicherung von Antriebsdaten, die zumindest eine programmierte Wegstrecke (T1) definieren, entlang der sich das Motorfahrzeug (1) von einem Startpunkt (P) zu einem Zielpunkt (A1) in einem gegebenen Bereich bewegen soll, sowie eine Verarbeitungseinheit (16), die dazu ausgelegt ist, eine Programmierung der programmierten Wegstrecke (T1) zu verwalten, und die zur Betätigung der Betätigungsmittel (14) auf Basis der gespeicherten Antriebsdaten operativ mit dem Betätigungsmittel (14) und der Speichereinheit (15) gekoppelt ist, so dass das Motorfahrzeug (1) die programmierte Wegstrecke (T1) abfährt, wobei die Verarbeitungseinheit (16) dazu ausgelegt ist, einen Selbstlern-Vorgang für die programmierte Wegstrecke (T1) durchzuführen, während dem die Verarbeitungseinheit (16) die Antriebsdaten automatisch generiert und in der Speichereinheit (15) speichert, während die programmierte Wegstrecke (T1) durch die manuelle Steuerung eines Fahrers des Motorfahrzeugs (1) abgefahren wird, **dadurch gekennzeichnet, dass** die Antriebsdaten einem Betätigungsumfang der Betätigungsmittel (14) entlang der programmierten Wegstrecke (T1) entsprechen.

2. Das System gemäß Anspruch 1, wobei die Speichereinheit (15) ferner dazu ausgelegt ist, Antriebsdaten entsprechend zumindest einer weiteren programmierten Wegstrecke (T2) zu speichern, und wobei die Verarbeitungseinheit (16) ferner dazu ausgelegt ist, eine der in der Speichereinheit (15) gespeicherten programmierten Wegstrecken (T1, T2) auszuwählen und die Betätigungsmittel (14) auf Basis der entsprechenden gespeicherten Antriebsdaten so anzusteuern, dass das Motorfahrzeug (1) auf der ausgewählten programmierten Wegstrecke (T1, T2) entlang fährt.

3. Das System gemäß Anspruch 2, wobei die automatische Antriebseinheit (11) ferner eine Benutzerschnittstelle (17) umfasst, die Mittel zur Aktivierung des automatischen Fahrens und/oder Mittel zur Anzeige von Ansteuerungsparametern bezüglich des automatischen Fahrens und/oder Mittel zur Auswahl der programmierten Wegstrecken (T1, T2) beinhaltet.

4. Das System gemäß einem der vorigen Ansprüche, ferner umfassend eine Überwachungseinheit (33, 35), die dazu ausgelegt ist, Antriebsdaten an das Motorfahrzeug (1) zu übermitteln, und wobei die automatische Antriebseinheit (11) ferner eine Empfangseinheit (32) umfasst, die dazu ausgelegt ist, die von der Überwachungseinheit (33, 35) übermittelten Antriebsdaten zu empfangen, und operativ mit der Verarbeitungseinheit (16) gekoppelt ist, um die empfangenen Antriebsdaten in der Speichereinheit (15) zu speichern.

5. Das System gemäß einem der vorigen Ansprüche, ferner umfassend eine Lokalisierungseinheit (30), die dazu ausgelegt ist, nach Beginn des automatischen Fahrens eine gültige Ausgangsposition des Motorfahrzeugs (1) zu bestimmen und an dieses zu übermitteln, und wobei die Verarbeitungseinheit (16) ferner dazu ausgelegt ist, einen anfänglichen Positionierfehler des Motorfahrzeugs (1) in Bezug auf den Startpunkt (P) zu bestimmen und das automatische Fahren des Motorfahrzeugs (1) auf Basis des anfänglichen Positionierfehlers in Gang zu setzen.

6. Das System gemäß Anspruch 5, wobei die Lokalisierungseinheit (30) eine Kamera oder Näherungssensoren außerhalb des Motorfahrzeugs (1) umfasst.

7. Das System gemäß einem der vorigen Ansprüche, ferner umfassend Wegstrecken-Steuerungsmittel (40, 42), die dazu ausgelegt sind, die Verarbeitungseinheit (16) in die Lage zu versetzen, die relative Position des Motorfahrzeugs (1) in Bezug auf die programmierte Wegstrecke (T1) während des automatischen Fahrens zu steuern, um etwaige Positionierfehler zu korrigieren, wobei die Wegstrecken-Steuerungsmittel (40, 42) Positions-Referenzelemente (42) umfassen, die entlang der programmierten Wegstrecke (T1) angeordnet sind, sowie eine künstliche optische Einheit (40), die dazu bestimmt ist, an Bord des Motorfahrzeugs (1) angeordnet und operativ mit der Verarbeitungseinheit (16) gekoppelt zu werden, um mit den Positions-Referenzelementen (42) zur Steuerung der relativen Position zusammenzuwirken.

8. Das System gemäß Anspruch 7, wobei den Positions-Referenzelementen (42) eine Positionskodierung zugeordnet ist, und die Verarbeitungseinheit (16) dazu ausgelegt ist, mit der künstlichen optischen Einheit (40) zur Lokalisierung des Motorfahrzeugs (1) entlang der programmierten Wegstrecke (T1) auf Basis der Positionskodierung zusammenzuwirken.

9. Das System gemäß einem der vorigen Ansprüche, wobei die automatische Antriebseinheit (11) ferner eine Vielzahl von Sensoren (12) umfasst, die operativ mit der Verarbeitungseinheit (16) gekoppelt und dazu ausgelegt sind, Betriebsparameter des Motorfahrzeugs (1) zu erfassen, wobei die Verarbeitungseinheit (16) während des automatischen Fahrens dazu ausgelegt ist, die programmierte Wegstrecke (T1) auf Basis der von den Sensoren (12) empfangenen Informationen zu regulieren.

10. Das System gemäß Anspruch 9, wobei die Sensoren (12) einen oder mehrere aus der Gruppe umfassend einen Lenkwinkelsensor, einen Reifen-Drehwinkelsensor, einen Gierratensensor, einen Beschleunigungsmesser sowie einen GPS-Sensor umfasst, und wobei die Betätigungsmittel (14) eines oder mehrere aus der Gruppe umfassend ein Lenk-Betätigungselement, ein Bremspedal-Betätigungselement sowie ein Gaspedal-Betätigungselement umfassen.

11. Das System gemäß einem der vorigen Ansprüche, wobei die Verarbeitungseinheit (16) dazu ausgelegt ist, von einem Fahrer des Motorfahrzeugs (1) während des automatischen Fahrens über die Antriebsvorrichtungen ausgeführte manuelle Befehle zu erfassen und die manuellen Befehle mit Vorrang vor dem automatischen Fahren auszuführen.

12. Das System gemäß Anspruch 11, wobei die Verarbeitungseinheit (16) dazu ausgelegt ist, das automatische Fahren zu unterbrechen, wenn die manuellen Befehle mit gegebenen Kriterien übereinstimmen.

13. Das System gemäß einem der vorigen Ansprüche, wobei die Verarbeitungseinheit (16) ferner dazu ausgelegt ist, das automatische Fahren entlang einer rückwärts gerichteten Wegstrecke in Bezug auf die programmierte Wegstrecke (T1), die sich vom Zielpunkt (A1) zum Startpunkt (P) erstreckt, durchzuführen.

14. Einsatz des automatischen Antriebssystems (10) gemäß einem der vorigen Ansprüche zum automatischen Fahren des Fahrzeugs in dem gegebenen Bereich, wobei der gegebene Bereich abgegrenzt und kontrolliert ist, wobei der Bereich insbesondere ein Güter-Lade-/Entladebereich ist, wobei der Startpunkt (P) am Eingang des Güter-Lade-/Entladebereiches liegt und der Zielpunkt (A1) der Punkt ist, an dem Güter auf-/entladen werden.

15. Eine automatische Antriebseinheit (11) an Bord eines Fahrzeugs zum Einsatz in einem automatischen Antriebssystem (10) gemäß einem der Ansprüche 1-13.

16. Ein Motorfahrzeug (1) mit einer automatischen Antriebseinheit (11) an Bord des Fahrzeugs gemäß Anspruch 15.

17. Ein Software-Produkt, das auf eine Speichereinheit (15) einer Verarbeitungseinheit (16) einer automatischen Antriebseinheit (11) an Bord des Fahrzeugs ladbar ist und dazu ausgelegt ist, bei Ausführung einen automatischen Antrieb des Motorfahrzeugs (1) in einem automatischen Antriebssystem (10) gemäß einem der Ansprüche 1-13 einzuleiten.

## Revendications

1. Système de conduite automatique (10) pour un véhicule motorisé (1), comprenant : une unité de conduite automatique (11) prévue pour être agencée à bord du véhicule motorisé (1) et comprenant des moyens d'actionnement (14) configurés pour commander un ou plusieurs dispositifs de conduite du véhicule motorisé (1) ; une unité de stockage (15) configurée pour stocker des données de conduite définissant au moins un trajet programmé (T1) destiné à être parcouru par le véhicule motorisé (1) d'un point de départ (P) à un point cible (A1) à l'intérieur d'une zone donnée ; et une unité de traitement (16) fonctionnellement couplée aux moyens d'actionnement (14) et à l'unité de stockage (15) et configurée pour gérer la programmation du trajet programmé (T1) et pour faire fonctionner les moyens d'actionnement (14) en fonction des données de conduite stockées pour faire en sorte que le véhicule motorisé (1) parcoure le trajet programmé (T1) ; dans lequel l'unité de traitement (16) est configurée pour implémenter une procédure pour auto-apprendre le trajet programmé (T1), durant laquelle l'unité de traitement (16) génère automatiquement et stocke les données de conduite dans l'unité de stockage (15) alors que le trajet programmé (T1) est parcouru, sous le contrôle manuel d'un conducteur du véhicule motorisé (1) ; **caractérisé en ce que** les données de conduite correspondent à une mesure d'actionnement des moyens d'actionnement (14) le long du trajet programmé (T1).

2. Système selon la revendication 1, dans lequel l'unité de stockage (15) est en outre configurée pour stocker des données de conduite correspondant à au moins un trajet programmé supplémentaire (T2) ; et dans lequel l'unité de traitement (16) est en outre configurée pour sélectionner un des trajets programmés (T1, T2) stockés dans l'unité de stockage (15) et pour faire fonctionner les moyens d'actionnement (14) en fonction des données de conduite stockées correspondantes pour faire en sorte que le véhicule motorisé (1) parcoure le trajet programmé sélectionné (T1, T2).

3. Système selon la revendication 2, dans lequel l'unité de conduite automatique (11) comprend en outre une interface utilisateur (17) comprenant des moyens pour activer la conduite automatique ; et/ou des moyens pour afficher des paramètres de fonctionnement correspondant à la conduite automatique ; et/ou des moyens pour sélectionner les trajets programmés (T1, T2).

4. Système selon une quelconque des revendications précédentes, comprenant en outre une unité de supervision (33, 35) configurée pour transmettre des données de conduite au véhicule motorisé (1) ; et dans lequel l'unité de conduite automatique (11) comprend en outre une unité de réception (32) configurée pour recevoir les données de conduite transmises par l'unité de supervision (33, 35) et fonctionnellement couplée à l'unité de traitement (16) pour stocker les données de conduite reçues dans l'unité de stockage (15).

5. Système selon une quelconque des revendications précédentes, comprenant en outre une unité de localisation (30) configurée pour déterminer et transmettre au véhicule motorisé (1) une position initiale effective de celui-ci lors du démarrage de la conduite automatique ; et dans lequel l'unité de traitement (16) est en outre configurée pour déterminer une erreur de positionnement initiale du véhicule motorisé (1) par rapport au point de départ (P), et pour implémenter la conduite automatique du véhicule motorisé (1) en fonction de l'erreur de positionnement initiale.

6. Système selon la revendication 5, dans lequel l'unité de localisation (30) comprend un appareil de prises de vue ou des capteurs de proximité externes au véhicule motorisé (1).

7. Système selon une quelconque des revendications précédentes, comprenant en outre des moyens de commande de trajet (40, 42) configurés pour permettre à l'unité de traitement (16) de commander la position relative du véhicule motorisé (1) par rapport au trajet programmé (T1) durant la conduite automatique pour corriger des quelconques erreurs de positionnement possibles ; les moyens de commande de trajet (40, 42) comprenant des éléments de référence de position (42) agencés le long du trajet programmé (T1), et une unité de vision artificielle (40) prévue pour être agencée à bord du véhicule motorisé (1) et fonctionnellement couplée à l'unité de traitement (16) pour coopérer avec les éléments de référence de position (42) pour commander la position relative.

8. Système selon la revendication 7, dans lequel un encodage de position est associé aux éléments de référence de position (42), et l'unité de traitement (16) est configurée pour coopérer avec l'unité de vision artificielle (40) pour localiser le véhicule motorisé (1) le long du trajet programmé (T1) en fonction de l'encodage de position.

9. Système selon une quelconque des revendications précédentes, dans lequel l'unité de conduite automatique (11) comprend en outre une pluralité de capteurs (12) fonctionnellement couplés à l'unité de traitement (16) et conçus pour détecter des paramètres de fonctionnement du véhicule motorisé (1) ; durant la conduite automatique, l'unité de traitement (16) étant configurée pour commander par rétroaction le trajet programmé (T1) en fonction des informations reçues à partir des capteurs (12).

10. Système selon la revendication 9, dans lequel les capteurs (12) comprennent un ou plusieurs parmi un capteur d'angle de braquage, un capteur d'angle de rotation de roue, un capteur de lacet, un accéléromètre et un capteur GPS ; et dans lequel les moyens d'actionnement (14) comprennent un ou plusieurs parmi un actionneur de braquage, un actionneur de pédale de frein, et un actionneur de pédale d'accélérateur.

11. Système selon une quelconque des revendications précédentes, dans lequel l'unité de traitement (16) est configurée pour détecter des instructions manuelles données par un conducteur du véhicule motorisé (1) sur les dispositifs de conduite durant la conduite automatique et pour faire fonctionner les instructions manuelles avec une priorité par rapport à la conduite automatique.

12. Système selon la revendication 11, dans lequel l'unité de traitement (16) est configurée pour interrompre la conduite automatique lorsque les instructions manuelles satisfont à des critères donnés.

13. Système selon une quelconque des revendications précédentes, dans lequel l'unité de traitement (16) est en outre configurée pour implémenter la conduite automatique le long d'un trajet inverse par rapport au trajet programmé (T1), qui s'étend du point cible (A1) au point de départ (P).

14. Utilisation du système de conduite automatique (10) selon une quelconque des revendications précédentes, pour conduire automatiquement le véhicule dans la zone donnée ; la zone donnée étant limitée et contrôlée, en particulier la zone étant une zone de chargement/ déchargement de marchandises, le point de départ (P) étant à l'entrée de la zone de chargement/déchargement de marchandises, et le point cible (A1) étant le point dans lequel des marchandises sont chargées/déchargées.

15. Unité embarquée de conduite automatique (11) pour l'utilisation dans un système de conduite automatique (10) selon une quelconque des revendications 1 à 13.

16. Véhicule motorisé (1) pourvu d'une unité embarquée de conduite automatique (11) selon la revendication 15.

17. Produit logiciel chargeable dans une unité de stockage (15) d'une unité de traitement (16) d'une unité embarquée de conduite automatique (11), et configuré pour faire en sorte, lorsqu'il est exécuté, que le véhicule motorisé (1) soit conduit automatiquement dans un système de conduite automatique (10) selon une quelconque des revendications 1 à 13.
